Europäisches Patentamt

(19) European Patent Office

Office européen des brevets

(11) **EP 1 258 050 B1**

(12) **FASCICULE DE BREVET EUROPEEN**

(45) Date de publication et mention
de la délivrance du brevet:
**01.10.2003 Bulletin 2003/40**

(21) Numéro de dépôt: **01907865.8**

(22) Date de dépôt: **21.02.2001**

(51) Int Cl.$^7$: **H01M 10/04**, H01M 10/40

(86) Numéro de dépôt international:
**PCT/FR01/00508**

(87) Numéro de publication internationale:
**WO 01/063684 (30.08.2001 Gazette 2001/35)**

(54) **ELEMENT DE GENERATEUR ELECTROCHIMIQUE ET BATTERIE CORRESPONDANTE**

ELEMENT FÜR ELEKTROCHEMISCHEN GENERATOR UND ENTSPRECHENDE BATTERIE

ELECTROCHEMICAL GENERATOR ELEMENT AND CORRESPONDING BATTERY

(84) Etats contractants désignés:
**DE ES FR GB IT**

(30) Priorité: **22.02.2000 FR 0002197**

(43) Date de publication de la demande:
**20.11.2002 Bulletin 2002/47**

(73) Titulaire: **Electricité de France
75008 Paris (FR)**

(72) Inventeur: **LASCAUD, Stéphane
F-77300 Fontainebleau (FR)**

(74) Mandataire: **Jacobson, Claude et al
Cabinet Lavoix
2, Place d'Estienne d'Orves
75441 Paris Cedex 09 (FR)**

(56) Documents cités:
**EP-A- 0 298 800        WO-A-99/60651
US-A- 4 315 061        US-A- 5 840 087
US-A- 5 902 697**

• **PATENT ABSTRACTS OF JAPAN vol. 2000, no.
02, 29 février 2000 (2000-02-29) -& JP 11 307084
A (MATSUSHITA ELECTRIC IND CO LTD), 5
novembre 1999 (1999-11-05)**

**Description**

La présente invention concerne un élément de générateur électrochimique comportant les caractéristiques du préambule de la revendication 1.

L'invention s'applique par exemple aux batteries électrochimiques au lithium-polymère pour des véhicules électriques ou des applications stationnaires.

On connaît des générateurs électrochimiques au lithium à électrolyte polymère. De tels générateurs comprennent généralement des éléments constitués par deux demi- éléments connectés électriquement en parallèle.

Chaque demi-élément est réalisé par une couche de cathode qui est appliquée par l'intermédiaire d'une couche d'électrolyte sur l'une de deux faces d'une couche en lithium. Le courant est prélevé par des collecteurs de courant agencés sur la surface libre des cathodes et des pattes collectrice reliées à la couche de lithium.

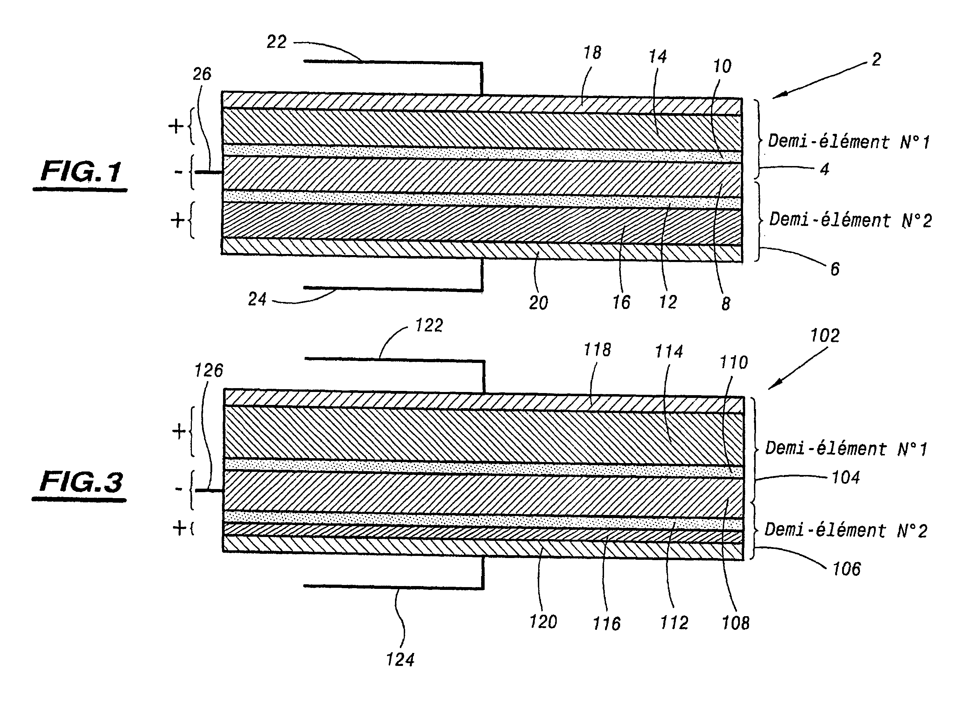

Les couches de cathode sur les deux côtés de la couche de lithium ont la même épaisseur (Figure 1). Afin d'augmenter l'énergie spécifique (énergie massique) d'un tel générateur électrochimique, on augmente l'épaisseur des deux couches cathodiques de la même valeur. De façon correspondante, on augmente aussi l'épaisseur de la couche en lithium. Ceci a pour effet que la puissance spécifique (puissance massique) maximale diminue en raison de l'augmentation de la résistance de l'élément.

L'invention a pour but de pallier cet inconvénient et de fournir un élément électrochimique dans lequel l'énergie spécifique est sensiblement indépendante de la puissance spécifique maximale.

A cet effet, l'invention a pour objet un élément de générateur électrochimique du type indiqué, comprenant les caractéristiques de la partie caractérisante de la revendication 1.

Suivant des modes particuliers de réalisation l'invention comporte l'une ou plusieurs des caractéristiques des revendications dépendantes 2 à 6.

L'invention a également pour objet une batterie électrochimique telle que décrite par la revendication 7.

L'invention sera mieux comprise à la lecture de la description qui va suivre, donnée uniquement à titre d'exemple et faite en référence aux dessins annexés sur lesquels :

- la Figure 1 est une coupe transversale d'un élément de générateur électrochimique au lithium polymère connu ;
- la Figure 2 montre l'énergie spécifique et la puissance spécifique d'un élément électrochimique de l'état de la technique en fonction de l'épaisseur des cathodes;
- la Figure 3 est une coupe transversale d'un élément générateur électrochimique au lithium polymère selon l'invention ; et
- la Figure 4 montre l'énergie spécifique et la puissance spécifique des éléments électrochimiques selon l'invention et indique le ratio entre ces deux dernières en fonction de l'épaisseur de cathode.

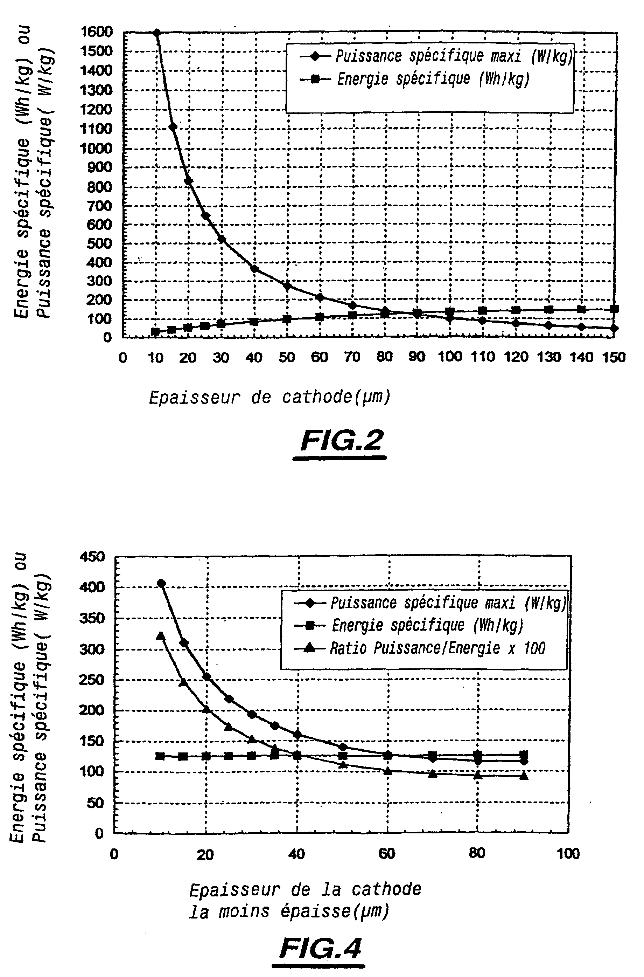

Pour mieux comprendre l'effet de l'invention, on va tout d'abord décrire le problème posé par l'état de la technique en se référant aux figures 1 et 2.

La Figure 1 montre en coupe transversale un élément de générateur électrochimique 2 de l'état de la technique. L'élément comprend deux demi-éléments 4, 6 qui sont constitués chacun par une couche en lithium 8 commune, une couche d'électrolyte 10, 12, une couche d'électrode positive 14, 16 et un collecteur de courant 18, 20.

Des conducteurs électriques 22, 24 sont connectés aux collecteurs 18, 20 et un conducteur électrique 26 est connecté à la couche en lithium 8.

En fonction du type d'accumulateur, les conducteurs 24, 26 peuvent être connectés directement aux couches d'électrode positive 14, 16, de telle façon que la collection de courant soit effectuée par les conducteurs 24, 26.

Les deux conducteurs électriques 22, 24 sont connectés à un côté d'un utilisateur (non représenté), tandis que le conducteur électrique 26 est connecté à l'autre côté de l'utilisateur de sorte qu'il se forme une connexion en parallèle des deux demi-éléments 4, 6.

Les couches d'électrolyte 10, 12 ont chacune une épaisseur de 30 $\mu$m et séparent les couches d'électrodes positives 14, 16 de la couche en lithium 8 commune qui sert comme électrode négative.

La couche en lithium a une épaisseur comprise entre 10 $\mu$m et 150 $\mu$m, de préférence entre 30 $\mu$m et 70 $\mu$m.

Les couches d'électrodes positives 14, 16 présentent chacune (dans cet exemple) une épaisseur de 90 $\mu$m et sont fabriquées en un matériau qui contient une certaine quantité Y de $V_2O_5$, généralement plus de 50%. Cette quantité de $V_2O_5$ détermine la capacité spécifique qui est dans le cas de Y = 54%, 153 Ah/kg.

En variante, on peut utiliser un oxyde de nickel, de cobalt, de manganèse ou un mélange de ces oxydes au lieu de $V_2O_5$.

La résistance surfacique interne d'un demi-élément est calculée par la formule suivante :

$$R_{s\_de} = R_{s\_Li/e1} + r_{s\_e1} \cdot e_{e1} + r_{s\_cath} \cdot e_{cath} \qquad (1.1.)$$

où $R_{s\_Li/e1}$ est la résistance surfacique d'interface entre l'électrolyte 10, 12 et la couche anodique en lithium 8. Elle a pour valeur 10 $\Omega$ cm$^2$. $r_{s\_e1}$ est la résistance spécifique de l'électrolyte 10, 12 ($r_{s\_e1}$ = 0,2 $\Omega$ cm$^2$/$\mu$m). $r_{s\_cath}$ est la résistance spécifique des cathodes 14, 16 à 80% de profondeur de décharge ($r_{s\_cath}$ = 3,5 $\Omega$cm$^2$/$\mu$m).

$e_{e1}$ et $e_{cath}$ sont l'épaisseur de la couche d'électrolyte 10, 12 ($e_{e1}$ = 30 $\mu$m) et l'épaisseur de la couche de cathode 14, 16 ($e_{cath}$ = 90$\mu$m).

Les résistances surfaciques indiquées sont valables pour une température de 90$^\circ$C.

Les résistances électriques des collecteurs de courant 22, 24, 26 et du lithium 8 sont considérées comme négligeables devant les résistances surfaciques d'interface, d'électrolyte et de cathode.

Pour l'élément électrochimique 2 donné, un demi-élément 4, 6 a donc la résistance surfacique :

$$R_{s\_de} = 10 \ \Omega \ cm^2 + 0,2 \ \Omega \ cm^2/\mu m \ . \ 30 \ \mu m + 3,5 \ \Omega \ cm^2/\mu m \ .$$

$$90 \ \mu m = 331 \ \Omega \ cm^2.$$

La résistance surfacique interne d'un tel élément est calculée par la formule suivante (connexion en parallèle) :

$$R_{s\_e} = \frac{R_{s\_de} R_{s\_de}}{R_{s\_de} + R_{s\_de}} = \frac{R_{s\_de}}{2}$$

Pour l'exemple donné la résistance surfacique est

$$R_{s\_e} = \frac{333 \Omega cm^2}{2} = 165,5 \Omega cm^2.$$

La puissance surfacique maximale produite par un tel élément 2 au lithium-polymère est donnée par la relation suivante :

$$P_{s\_max} = \frac{U_0^2}{4 R_{s\_e}}. \qquad (1.2.)$$

où $U_0$ est la tension à vide de l'élément 2 (2,2 V à 80% de décharge).

L'énergie par unité de surface est donnée par la formule suivante :

$$E_{s\_e} = E_{s\_de1} + E_{s\_de2} = (e_{cath1} + e_{cath2}) \cdot \rho_{cath} \cdot Y \cdot E_s \cdot U_{moy} \qquad (1.2.)$$

où $E_{s\_deX}$ est l'énergie surfacique du demi-élément 1 ou 2 ; $e_{cathX}$ est l'épaisseur de la cathode correspondante, $\rho$ est la densité de la cathode ($\rho$ = 2,1 g/cm$^3$), Y est la teneur en $V_2O_5$ de la cathode en % en poids (54%), $E_s$ est la capacité spécifique de $V_2O_5$ (153 Ah/kg) et $U_{moy}$ est la tension moyenne de 2,55 V.

$E_{s\_e}$ = 7,98 mWh/cm$^2$ pour l'exemple donné.

Afin d'augmenter l'énergie surfacique spécifique d'un élément au lithium-polymère 2, on a déjà proposé d'augmenter l'épaisseur des deux couches de cathode 14, 16. Ceci a comme résultat que la résistance surfacique des deux demi-éléments 4, 6 augmente tandis que la tension à vide de l'élément 2 reste constante et ainsi la puissance surfacique et, en conséquence, la puissance spécifique de l'élément 2 diminue.

L'épaisseur de la couche lithium reste constante.

Le rapport entre la puissance maximale de l'élément 2 et l'énergie spécifique de l'élément 2 diminue avec l'augmentation de l'épaisseur des couches de cathodes.

Le tableau 1 montre, en fonction de l'épaisseur des cathodes, les valeurs de résistance surfacique, de puissance surfacique à 80% de décharge, d'énergie surfacique, le rapport de la puissance surfacique à l'énergie surfacique, la masse surfacique, la puissance spécifique et l'énergie spécifique. Les valeurs sont établies à une température de 90°C.

TABLEAU 1

| Epaisseur cathode | Résistance Surfacique | Puiss. surf. max. | Energie surf. | Pmax/ Energie | Masse surfacique | Puissance spécifique max. | Energie spécifique |
|---|---|---|---|---|---|---|---|
| µm | Ohm.cm$^2$ | mW/cm$^2$ | mWh/cm$^2$ | | Mg/cm$^2$ | W/kg | Wh/kg |
| 10 | 25,50 | 47,45 | 0,89 | 53,53 | 29,7 | 1597,6 8 | 29,85 |
| 15 | 34,25 | 35,33 | 1,33 | 26,57 | 31,8 | 1110,9 6 | 41,82 |
| 20 | 43,00 | 28,14 | 1,77 | 15,87 | 33,9 | 830,07 | 52,30 |
| 25 | 51,75 | 23,38 | 2,22 | 10,55 | 36 | 649,49 | 61,56 |
| 30 | 60,50 | 20,00 | 2,66 | 7,52 | 38,1 | 524,93 | 69,80 |
| 40 | 78,00 | 15,51 | 3,55 | 4,37 | 42,3 | 366,73 | 83,83 |
| 50 | 95,50 | 12,67 | 4,43 | 2,86 | 46,5 | 272,48 | 95,32 |
| 60 | 113,00 | 10,71 | 5,32 | 2,01 | 50,7 | 211,20 | 104,91 |
| 70 | 130,50 | 9,27 | 6,21 | 1,49 | 54,9 | 168,89 | 113,03 |
| 80 | 148,00 | 8,18 | 7,09 | 1,15 | 59,1 | 138,34 | 120,00 |
| 90 | 165,50 | 7,31 | 7,98 | 0,92 | 63,3 | 115,50 | 126,05 |
| 100 | 183,00 | 6,61 | 8,87 | 0,75 | 67,5 | 97,96 | 131,34 |
| 110 | 200,50 | 6,03 | 9,75 | 0,62 | 71,7 | 84,17 | 136,01 |
| 120 | 218,00 | 5,55 | 10,64 | 0,52 | 75,9 | 73,13 | 140,16 |
| 130 | 235,00 | 5,14 | 11,52 | 0,45 | 80,1 | 64,14 | 143,88 |
| 140 | 253,00 | 4,78 | 12,41 | 0,39 | 84,3 | 56,73 | 147,23 |
| 150 | 270,50 | 4,47 | 13,30 | 0,34 | 88,5 | 50,54 | 150,26 |

La Figure 2 est un graphique montrant l'énergie spécifique et de la puissance spécifique en fonction de l'épaisseur de cathode d'un élément électrochimique connu.

On constate qu'une augmentation de l'énergie spécifique d'une cellule au lithium-polymère par augmentation de la même valeur des épaisseurs des deux couches cathodiques n'est pas possible sans réduire la puissance spécifique.

Maintenant l'invention sera décrite en se référant aux Figures 3 et 4.

La Figure 3 montre un élément de générateur électrochimique 102 au lithium à électrolyte polymère selon l'invention, en coupe transversale.

Sur la Figure 3, les éléments analogues à ceux de la Figure 1 sont désignés par des numéros de référence augmentés de 100.

L'élément de générateur électrochimique 102 comporte, comme l'élément de la Figure 1, deux demi-éléments 104, 106 comportant chacun une partie d'une couche de lithium 108 commune, une couche d'électrolyte 110, 112 et une couche de cathode 114, 116 ainsi qu'une couche formant collecteur 118, 120.

Les épaisseurs de la couche de lithium 108 et des couches d'électrolyte 110, 112 sont les mêmes que celles des couches 8, 11 et 12 de l'élément 2 de la Figure 1.

En revanche, les épaisseurs des deux couches de cathode 114, 116 sont différentes l'une par rapport à l'autre tandis que leur somme est égale à celle des deux couches de cathode 14, 16 de l'élément 2 de la Figure 1. L'épaisseur de la première couche 114 est par exemple de 150 µm. Pour cet exemple, elle peut être comprise entre 130 µm et 170 µm, de préférence entre 140 µm et 160 µm. L'épaisseur de la deuxième couche 116 est de 30 µm, et peut être comprise entre 10 µm et 50 µm, de préférence entre 20 µm et 40 µm.

De façon générale, la couche la plus épaisse peut avoir une épaisseur comprise entre 80µm et 200 µm, de préférence entre 100 et 160 µm.

Afin de pouvoir comparer la puissance et l'énergie des deux éléments 2 et 102, on va calculer la résistance surfacique de l'élément 102 selon l'invention comme suit.

La résistance surfacique électrique de chacun des deux demi-éléments est calculée en utilisant la formule (1.1.) pour des valeurs respectives d'épaisseur des couches cathodiques 114, 116.

Là encore, les résistances surfaciques électriques des collecteurs de courant 118, 120 et de la couche 108 de lithium sont considérées comme négligeables.

Les valeurs des résistances spécifiques à une température de fonctionnement de 90°C restent les mêmes.

Pour un élément constitué d'un assemblage de deux demi-éléments comportant des couches de cathode de 30 $\mu$m et 150 $\mu$m respectivement, le calcul de la résistance surfacique interne des deux demi-éléments 104, 106 donne les valeurs suivantes :

$$R_{s\_de1} = 60,5 \ \Omega \ cm^2$$

$$R_{s\_de2} = 270,5 \ \Omega \ cm^2.$$

La résistance surfacique de l'élément complet 102 est calculée par la formule suivante relative à la connexion en parallèle des deux éléments.

$$R_{s\_e} = \frac{R_{s\_de1}R_{s\_de2}}{R_{s\_de1} + R_{s\_de2}}$$

où $R_{s\_deX}$ est la résistance surfacique du demi-élément X (X $\in$ [1,2]).

Pour l'ensemble donné la résistance surfacique totale de l'élément est :

$$R_{s\_e} = 121 \ \Omega \ cm^2.$$

La puissance maximum (à 80% de décharge) par unité de surface vaut alors, en utilisant la formule 1.2. :

$$P_{s\_max} = 10 \ \frac{mW}{cm^2}$$

L'énergie contenue par unité de surface de l'élément 102 est calculée par la relation de la formule 1.3. :

$$E_{s\_e} = E_{s\_de1} + E_{s\_de2} = (e_{cath1} + e_{cath2}) \cdot \rho_{cath} \cdot Y \cdot E_s \cdot U_{moy}$$

Le rapport de la puissance surfacique à l'énergie surfacique est alors :

$\dfrac{P_{max}}{E_{s\_e}}$ = 1,52, ce qui signifie une augmentation de 60% par rapport à l'élément de l'état de la technique qui a un

rapport $\dfrac{P_{max}}{E_{s\_e}}$ = 0,92 (cf. tableau 1).

On conçoit que pour une épaisseur totale de cathode équivalente (180 $\mu$m), l'augmentation d'épaisseur de la première cathode 114 de 90 $\mu$m à 150 $\mu$m, d'une part, et la diminution d'épaisseur de la deuxième cathode 116 de 90 $\mu$m à 30 $\mu$m, d'autre part, permet de diminuer la résistance surfacique interne de l'élément de 160,5 $\Omega$ cm$^2$ à 121 $\Omega$ cm$^2$. Pour une densité d'énergie spécifique constante, puisque la masse et le volume n'ont pas changé, la puissance spécifique est fortement augmentée.

Le tableau 2 montre les résistances surfaciques de deux demi-éléments 114, 116 de différentes épaisseurs pour un élément 102 avec une épaisseur totale de cathode de 180 $\mu$m. Il montre en outre la résistance surfacique résultante de l'élément correspondant, ainsi que le gain de puissance par rapport à un élément 2 à couches cathodiques de la figure 1 ayant chacune une épaisseur égale à 90 $\mu$m.

La Figure 4 est un graphique montre la puissance spécifique, l'énergie spécifique ainsi que le rapport entre ces deux dernières en fonction de l'épaisseur de la couche cathodique la moins épaisse pour un élément selon l'invention dont les couches cathodiques ont une somme d'épaisseurs de 180 μm.

TABLEAU 2

| $d_{cath\,1}$ | $d_{cath2}$ | Résistance surf. demi-el.1 | Résistance surf. demi-el.2 | Résistance surf. élément | P/PO |
|---|---|---|---|---|---|
| μm | μm | Ohm.cm$^2$ | Ohm.cm$^2$ | Ohm.cm$^2$ | Gain % |
| 90 | 90 | 331 | 331 | 165,5 | 0,00 |
| 80 | 100 | 296 | 366 | 163,6 | 1,13 |
| 70 | 110 | 261 | 401 | 158,1 | 4,68 |
| 60 | 120 | 226 | 436 | 148,8 | 11,19 |
| 50 | 130 | 191 | 471 | 135,9 | 21,79 |
| 40 | 140 | 156 | 506 | 119,2 | 38,80 |
| 35 | 145 | 138,5 | 523,5 | 109,5 | 51,11 |
| 30 | 150 | 121 | 541 | 98,9 | 67,37 |
| 25 | 155 | 103,5 | 558,5 | 87,3 | 89,54 |
| 20 | 160 | 86 | 576 | 74,8 | 121,17 |
| 15 | 165 | 68,5 | 593,5 | 61,4 | 169,49 |
| 10 | 170 | 51 | 611 | 47,1 | 251,60 |

On constate qu'il est possible par l'augmentation de l'épaisseur d'une couche à 170 μm et la diminution de l'épaisseur de l'autre couche à 10 μm, d'augmenter la puissance spécifique d'un facteur 2,5 par rapport à la puissance disponible d'un élément dont les électrodes positives ont chacune une épaisseur de 90 μm.

L'invention permet donc d'accroître la puissance spécifique et en conséquence la densité de puissance disponible dans un élément de générateur électrochimique au lithium à électrolyte polymère à énergie spécifique constante.

Elle permet de moduler le rapport de la puissance à l'énergie en fonction de l'application envisagée pour une densité d'énergie donnée.

Il est clair que l'invention n'est pas limitée à l'exemple donné. Les épaisseurs des couches d'électrode, peuvent être modifiées dans de larges plages et la somme des épaisseurs des couches cathodiques n'est pas limitée à 180 μm mais peut aussi être modifiée.

L'invention peut aussi être appliquée à des cellules électrogénératrices utilisant d'autres matériaux d'électrodes positive ou négative que du lithium et du polymère.

En général, elle peut être appliquée à tout type de cellule électrogénératrice d'assemblage à couche mince.

En variante, l'invention peut également être appliquée à des cellules ayant une couche d'électrode positive commune et deux couches d'électrodes négatives ayant des épaisseurs différentes, dont une couche est disposée de chacun des deux côtés de la couche d'électrode positive.

## Revendications

**1.** Elément de générateur électrochimique (102) comportant successivement une première couche d'électrode d'une polarité (114), une première couche d'électrolyte (110), une couche d'électrode d'une polarité inverse (108), une deuxième couche d'électrolyte (112), une deuxième couche d'électrode de ladite polarité (116), lesdites couches d'électrodes de ladite polarité (114, 116) étant connectés par une connexion en parallèle, l'élément comportant en outre des collecteurs de courant (118, 120) connectés aux couches d'électrodes de ladite polarité (114, 116), **caractérisé en ce que** l'épaisseur de ladite première couche d'électrode de ladite polarité (114) est différente de l'épaisseur de ladite deuxième couche d'électrode de ladite polarité (116).

**2.** Elément selon la revendication 1, **caractérisé en ce que** les couches d'électrodes de ladite polarité sont des couches d'électrode positives (114, 116), et **en ce que** la couche d'électrode de ladite polarité inverse est une couche d'électrode négative.

3. Elément selon la revendication 2, **caractérisé en ce que** ladite couche d'électrode négative (108) est en lithium ou en alliage à base de lithium, lesdites couches d'électrolyte (110, 112) sont en un matériau solide polymère et lesdites couches d'électrode positives (114, 116) sont en un matériau composite comportant de l'oxyde de vanadium, de nickel, de cobalt ou de manganèse ou d'un mélange de ces derniers.

4. Elément selon la revendication 2 ou la revendication 3, **caractérisé en ce que** l'épaisseur de ladite première couche d'électrode positive (114) est comprise entre 80 µm et 200 µm, de préférence entre 100 µm et 160 µm.

5. Elément selon la revendication 2 ou la revendication 3, **caractérisé en ce que** l'épaisseur de ladite première couche d'électrode positive (114) est comprise entre 130 µm et 170 µm, de préférence entre 140 µm et 160 µm.

6. Elément selon la revendication 4 ou la revendication 5, **caractérisé en ce que** l'épaisseur de ladite deuxième électrode positive (116) est comprise entre 10 µm et 50 µm, de préférence entre 20 µm et 40 µm.

7. Batterie électrochimique comportant au moins un élément selon l'une quelconque des revendications 1 à 6.


**Patentansprüche**

1. Elektrochemisches Generatorelement (102), das nacheinander eine erste Elektrodenschicht (114) einer Polarität, eine erste Elektrolytschicht (110), eine Elektrodenschicht (108) einer entgegengesetzten Polarität, eine zweite Elektrolytschicht (112) und eine zweite Elektrodenschicht (116) der einen Polarität umfaßt, wobei die Elektrodenschichten (114, 116) der einen Polarität durch eine Parallelschaltung verbunden sind, wobei das Element außerdem Stromkollektoren (118, 120) umfaßt, die mit den Elektrodenschichten (114, 116) der einen Polarität verbunden sind, **dadurch gekennzeichnet, daß** die Dicke der ersten Elektrodenschicht (114) der einen Polarität von der Dicke der zweiten Elektrodenschicht (116) der einen Polarität verschieden ist.

2. Element nach Anspruch 1, **dadurch gekennzeichnet, daß** die Elektrodenschichten der einen Polarität positive Elektrodenschichten (114, 116) sind und daß die Elektrodenschicht der entgegengesetzten Polarität eine negative Elektrodenschicht ist.

3. Element nach Anspruch 2, **dadurch gekennzeichnet, daß** die negative Elektrodenschicht (108) aus Lithium oder aus einer Legierung auf Lithiumbasis besteht, die Elektrolytschichten (110, 112) aus einem Polymer-Feststoff bestehen und die positiven Elektrodenschichten (114, 116) aus einem Verbundmaterial bestehen, das Vanadiumoxid, Nickeloxid, Cobaltoxid oder Manganoxid oder ein Gemisch aus diesen letzteren umfaßt.

4. Element nach Anspruch 2 oder Anspruch 3, **dadurch gekennzeichnet, daß** die Dicke der ersten positiven Elektrodenschicht (114) im Bereich von 80 µm bis 200 µm und vorzugsweise im Bereich von 100 µm bis 160 µm liegt.

5. Element nach Anspruch 2 oder Anspruch 3, **dadurch gekennzeichnet, daß** die Dicke der ersten positiven Elektrodenschicht (114) im Bereich von 130 µm bis 170 µm und vorzugsweise im Bereich von 140 µm bis 160 µm liegt.

6. Element nach Anspruch 4 oder Anspruch 5, **dadurch gekennzeichnet, daß** die Dicke der zweiten positiven Elektrode (116) im Bereich von 10 µm bis 50 um und vorzugsweise im Bereich von 20 µm bis 40 µm liegt.

7. Elektrochemische Batterie, die wenigstens ein Element nach einem der Ansprüche 1 bis 6 enthält.


**Claims**

1. An electrochemical generator element (102), having in succession a first electrode layer (114) of one polarity, a first electrolyte layer (110), an electrode layer (108) of an opposite polarity, a second electrolyte layer (112), a second electrode layer (116) of the said polarity, the said electrode layers (114, 116) of the said polarity being connected by a connection in parallel, the element furthermore having current collectors (118, 120) connected to the electrode layers (114, 116) of the said polarity, **characterised in that** the thickness of the said first electrode layer (114) of the said polarity is different from the thickness of the said second electrode layer of the said polarity (116).

2. An element according to Claim 1, **characterised in that** the electrode layers of the said polarity are positive electrode layers (114, 116), and **in that** the electrode layer of the said opposite polarity is a negative electrode layer.

3. An element according to Claim 2, **characterised in that** the said negative electrode layer (108) is made of lithium or an alloy based on lithium, the said electrolyte layers (110, 112) are made of a solid polymer material and the said positive electrode layers (114, 116) are made of a composite material including vanadium oxide, nickel oxide, cobalt oxide or manganese oxide or a mixture of these.

4. An element according to Claim 2 or Claim 3, **characterised in that** the thickness of the said first positive electrode layer (114) is between 80 µm and 200 µm, preferably between 100 µm and 160 µm.

5. An element according to Claim 2 or Claim 3, **characterised in that** the thickness of the said first positive electrode layer (114) is between 130 µm and 170 µm, preferably between 140 µm and 160 µm.

6. An element according to Claim 4 or Claim 5, **characterised in that** the thickness of the said second positive electrode (116) is between 10 µm and 50 µm, preferably between 20 µm and 40 µm.

7. An electrochemical battery, having at least one element according to any one of Claims 1 to 6.

EP 1 258 050 B1

*FIG.1*

22

26

18  14  10

2

+{

Demi-élément N°1

-{

4

+{

Demi-élément N°2

6

24

20  16  12  8

*FIG.3*

122

126

118  114  110

102

+{

Demi-élément N°1

-{

104

+{

Demi-élément N°2

106

124

120  116  112  108

FIG.2

FIG.4